# FASCICULE DE BREVET EUROPEEN

(11) **EP 3 987 381 B1**
(45) Date de publication et mention de la délivrance du brevet: **13.05.2026**
(21) Numéro de dépôt: 20731104.4
(22) Date de dépôt: 10.06.2020
(51) Int. Cl.: G06F 3/01, G06F 3/0346, G06T 19/20, G06F 3/0481

(54) **PROCÉDÉ DE GÉNÉRATION D'UNE REPRÉSENTATION VIRTUELLE D'UN ENVIRONNEMENT RÉEL, DISPOSITIFS ET SYSTÈME CORRESPONDANT**
VERFAHREN ZUR ERZEUGUNG EINER VIRTUELLEN DARSTELLUNG EINER REALEN UMGEBUNG, VORRICHTUNGEN UND ENTSPRECHENDES SYSTEM
METHOD FOR GENERATING A VIRTUAL REPRESENTATION OF A REAL ENVIRONMENT, DEVICES AND CORRESPONDING SYSTEM

(30) Priorité: 18.06.2019 FR 1906530
(43) Date de publication de la demande: 27.04.2022
(73) Titulaire: Orange, 92130 Issy-les-Moulineaux (FR)
(72) Inventeur: LEDUNOIS, Valérie, 92326 CHÂTILLON CEDEX (FR); JOUIN, Maxime, 92326 CHATILLON CEDEX (FR); FLOUTIER, Christophe, 92326 CHATILLON CEDEX (FR)
(74) Mandataire: Vidon Brevets & Stratégie
(86) Numéro de dépôt international: PCT/EP2020/066110
(87) Numéro de publication internationale: WO 2020/254171

(56) Documents cités:
- FR-A1- 3 074 332
- US-A1- 2019 043 259

## Description

### 1. Domaine de l'invention

L'invention concerne la représentation virtuelle d'un environnement réel, tel qu'un plan 2D ou une représentation 3D, et plus particulièrement la génération d'une représentation virtuelle de l'environnement réel à partir d'un casque de réalité virtuelle mixte.

### 2. Art Antérieur

Afin de générer une représentation 3D d'un espace réel, les professionnels utilisent en général un scanner 3D qui permet de scanner la pièce ou l'espace à modéliser. Toutefois, l'utilisation d'un tel appareil nécessite une calibration de l'appareil, et un bon positionnement dans l'espace à cartographier pour la prise de mesures. De plus, la modélisation obtenue à partir de données mesurées par un scanner 3D n'est toujours pas optimale, notamment dans le cas où l'espace à modéliser comporte des obstacles, par exemple dans le cas d'une pièce meublée. La modélisation nécessite alors des retouches manuelles qui peuvent être fastidieuses et nécessitent un certain niveau d'expertise avec les outils de CAO (pour Conception Assistée par Ordinateur). De plus, le coût d'un scanner 3D est assez élevé.

Une autre méthode pour générer une représentation 3D d'un espace réel est l'utilisation d'un plan 2D existant, généré manuellement ou bien obtenu à partir d'un fichier. Toutefois, une telle méthode nécessite des compétences spécialisées dans l'utilisation des logiciels de modélisation. De plus, les plans 2D d'architecte, lorsqu'ils sont disponibles, sont parfois en léger décalage par rapport à la réalisation effective.

Il existe donc un besoin d'améliorer l'état de la technique.

US 2019043259 A1 divulge l'estimation d'une zone de sécurité dans un environnement VR; la modification de sommets de cette zone via un contrôleur et l'affichage d'avertissements/collisions dans l'expérience VR.

### 3. Exposé de l'invention

Elle concerne à cet effet un procédé de génération d'une représentation virtuelle à au moins 2 dimensions, d'un environnement réel, la génération étant mise en œuvre par un casque de réalité virtuelle mixte destiné à être porté par un utilisateur, le casque de réalité virtuelle mixte étant associé à au moins un dispositif d'interface.

Avantageusement, selon l'invention, le procédé de génération comprend:
- une acquisition de coordonnées relatives dans l'environnement réel, correspondant à une position dudit dispositif d'interface dans l'environnement réel,
- suite à une interaction de l'utilisateur sur ledit dispositif d'interface, une détermination en fonction desdites coordonnées relatives de la position dudit dispositif d'interface dans l'environnement réel d'un point correspondant dans la représentation virtuelle,
- une génération de ladite représentation virtuelle à partir d'au moins le point associé aux coordonnées relatives de la position acquise dudit dispositif d'interface.

L'invention permet ainsi de générer une représentation virtuelle d'un environnement réel à l'échelle, à partir de mesures réalisées dans cet environnement réel. La prise de mesure est facilitée par l'utilisation avantageuse d'un casque de réalité virtuelle mixte associé à un dispositif d'interface que l'utilisateur manipule et positionne aux endroits où il souhaite prendre des mesures pour la modélisation de l'environnement réel.

Par casque de réalité virtuelle mixte, on entend ici un casque de réalité virtuelle adaptée pour visualiser à la fois l'environnement réel et la représentation virtuelle générée.

L'utilisation d'un tel casque pour le procédé de génération selon l'invention procure l'avantage que lors de la prise de mesures, l'utilisateur voit où il place le dispositif d'interface puisqu'il peut voir à travers le casque. De plus, ce type de casque fonctionne de manière autonome en ce qu'il ne nécessite pas l'installation de capteurs pour déterminer la position de l'utilisateur portant le casque dans l'espace réel ou la position du dispositif d'interface. Ainsi, la mise en place du casque pour la prise de mesures est simple.

L'invention permet une simplification de l'acquisition des données réelles pour la modélisation de l'environnement réel grâce à l'utilisation d'équipements grands publics faciles à utiliser, à un prix raisonnable et donc accessibles à un plus grand nombre d'utilisateurs. Notamment, le procédé de génération selon l'invention ne nécessite pas d'expertise dans les logiciels de modélisation ou la prise de mesure. Il permet également de limiter le risque d'erreurs dans le relevé des plans de l'environnement réel.

Selon un mode particulier de réalisation de l'invention, les coordonnées relatives sont définies par rapport à une position de référence de l'environnement réel, la position de référence correspondant à une position initiale du casque de réalité virtuelle associée à un point d'origine d'un référentiel de la représentation virtuelle.

Selon un autre mode particulier de réalisation de l'invention, lorsqu'au moins deux points de la représentation virtuelle sont successivement associés à au moins deux positions acquises dudit dispositif d'interface dans l'environnement réel, un élément virtuel est généré dans la représentation virtuelle. Avantageusement, la taille de l'élément virtuel généré dans la représentation virtuelle est à l'échelle par rapport à la distance entre les deux positions acquises successivement dans l'environnement réel.

Selon ce mode particulier de réalisation de l'invention, l'ajout dans la représentation virtuelle, d'un élément virtuel à l'échelle par rapport à l'environnement réel est facilité. Un tel élément virtuel peut être un élément existant de l'environnement réel, ou bien un élément purement virtuel ajouté par l'utilisateur dans la représentation virtuelle mais sans équivalent dans l'environnement réel. Par élément virtuel, on entend par exemple un élément de plan tel qu'un mur, plafond, porte, fenêtre, arbres, haies, chemins etc... ou bien un objet virtuel tel qu'un luminaire, prise électrique, radiateurs, meubles, etc... ou encore un élément géométrique tel qu'une ligne, une surface plane, concave ou convexe, etc....

Selon un autre mode particulier de réalisation de l'invention, un type de l'élément virtuel est préalablement sélectionné dans une librairie de types d'élément virtuel.

Selon ce mode particulier de réalisation de l'invention, une liste de types d'éléments virtuels est proposée à l'utilisateur pour sélection avant que celui-ci en définisse la taille dans la représentation virtuelle.

Selon un autre mode particulier de réalisation de l'invention, lorsque l'élément virtuel est un élément de plan, la librairie de types d'éléments virtuels comprend au moins l'un quelconque des types suivants: mur, fenêtre, porte, sol, plafond, luminaire, prise électrique, radiateur, chemin, pelouse, haie, arbre.

Selon un autre mode particulier de réalisation de l'invention, le casque de réalité virtuelle mixte affiche la représentation virtuelle à l'utilisateur.

Selon un autre mode particulier de réalisation de l'invention, lorsque la représentation virtuelle est une représentation en 3 dimensions, l'affichage de ladite représentation virtuelle est réalisé en superposition avec l'environnement réel visualisé par l'utilisateur via le casque de réalité virtuelle mixte.

Selon ce mode particulier de réalisation de l'invention, l'utilisateur peut visualiser en même temps et en superposition les deux environnements réel et virtuel. Par exemple, lorsqu'il envisage des modifications de l'environnement réel (aménagement de pièce ou d'espace verts, travaux, etc...), l'utilisateur peut mieux se rendre compte des conséquences des modifications envisagées pour l'espace réel.

L'invention concerne également un casque de réalité virtuelle mixte, apte à être connecté à un dispositif d'interface. Le casque comprend:
- un détecteur de position du dispositif d'interface dans un environnement réel dans lequel ledit casque est placé, le détecteur acquérant des coordonnées relatives d'une position dudit dispositif d'interface dans l'environnement réel,
- un processeur configuré pour déterminer, suite à une réception dudit signal d'interaction utilisateur en provenance dudit dispositif d'interface, en fonction des coordonnées relatives un point correspondant dans une représentation virtuelle à au moins 2 dimensions dudit environnement réel,
- un générateur de ladite représentation virtuelle à partir d'au moins le point associé aux coordonnées relatives de la position acquise dudit dispositif d'interface.

L'invention concerne également un dispositif d'interface apte à être connecté à un casque de réalité virtuelle mixte et comprenant:
- un émetteur échangeant avec un localisateur du dispositif d'interface dans un environnement réel dans lequel ledit casque est placé, le localisateur acquérant des coordonnées relatives d'une position dudit dispositif d'interface dans l'environnement réel,
- un détecteur d'interaction utilisateur sur ledit dispositif d'interface, et
- un émetteur d'un signal d'interaction utilisateur suite à ladite interaction utilisateur détectée, le signal d'interaction étant configuré pour déclencher un génération d'un représentation virtuelle à au moins 2 dimensions d'un environnement réel à partir d'au moins le point associé aux coordonnées relatives de la position acquise dudit dispositif d'interface.

Corrélativement, l'invention concerne également un système de génération d'une représentation virtuelle à au moins 2 dimensions, d'un environnement réel, comprenant un casque de réalité virtuelle mixte tel que décrit précédemment et au moins un dispositif d'interface tel que décrit précédemment.

L'invention concerne aussi un programme d'ordinateur comportant des instructions pour la mise en œuvre du procédé de génération d'une représentation virtuelle d'un environnement réel selon l'un quelconque des modes particuliers de réalisation décrits précédemment, lorsque ledit programme est exécuté par un processeur. Un tel programme peut utiliser n'importe quel langage de programmation. Il peut être téléchargé depuis un réseau de communication et/ou enregistré sur un support lisible par ordinateur. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon encore un autre aspect, un support d'enregistrement ou support d'informations lisible par un ordinateur est proposé, qui comprend des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une mémoire de type Read-Only Memory (ROM), par exemple un CD- ROM ou une ROM de circuit microélectronique, une mémoire flash montée sur un support de stockage amovible, tel qu'une clé USB, ou encore une mémoire de masse magnétique de type Hard-Disk Drive (HDD) ou Solid-State Drive (SSD), ou une combinaison de mémoires fonctionnant selon une ou plusieurs technologies d'enregistrement de données. D'autre part, les supports d'enregistrement peuvent correspondre à un support transmissible tel qu'un signal électrique ou optique, qui peut être acheminé via un câble électrique ou optique, par radio ou par d'autres moyens. En particulier, le programme d'ordinateur proposé peut être téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

Le procédé de génération d'une représentation virtuelle d'un environnement réel mentionné ci-dessus peut donc être mis en œuvre de diverses manières, notamment sous forme matérielle ou sous forme logicielle, ou être mise en œuvre sous forme d'une combinaison d'éléments matériels et logiciels.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
[FIG. 1] La figure 1 illustre un environnement de mise en œuvre de l'invention selon un mode particulier de réalisation de l'invention,
[FIG. 2] La figure 2 illustre des étapes d'un procédé de génération d'une représentation virtuelle à au moins 2 dimensions, d'un environnement réel, selon un mode particulier de réalisation de l'invention,
[FIG. 3] La figure 3 illustre un exemple de prise de mesures dans l'environnement réel,
[FIG. 4A] La figure 4A illustre un exemple d'une représentation virtuelle en 3D de l'environnement réel illustré en figure 1 lors de l'exécution du procédé de génération d'une représentation virtuelle,
[FIG. 4B] La figure 4B illustre un exemple d'une représentation virtuelle en 3D de l'environnement réel illustré en figure 1 lors de l'exécution du procédé de génération d'une représentation virtuelle,
[FIG. 4C] La figure 4C illustre un exemple d'une représentation virtuelle en 3D de l'environnement réel illustré en figure 1 lors de l'exécution du procédé de génération d'une représentation virtuelle,
[FIG. 4D] La figure 4D illustre un exemple d'une représentation virtuelle en 3D de l'environnement réel illustré en figure 1 lors de l'exécution du procédé de génération d'une représentation virtuelle,
[FIG. 5] La figure 5 illustre un exemple de casque de réalité virtuelle mixte et de dispositifs d'interface associés,
[FIG. 6] La figure 6 illustre de manière simplifiée un exemple d'architecture d'un casque de réalité virtuelle mixte selon un mode particulier de réalisation de l'invention,
[FIG. 7] La figure 7 illustre de manière simplifiée un exemple d'architecture d'un dispositif d'interface selon un mode particulier de réalisation de l'invention,
[FIG. 8A] La figure 8A illustre un autre exemple d'environnement réel à modéliser,
[FIG. 8B] La figure 8B illustre un exemple d'une représentation virtuelle en cours de génération de l'environnement réel illustré en figure 8A, la représentation virtuelle étant affichée en superposition avec l'environnement réel.

### 5. Description d'un mode de réalisation de l'invention

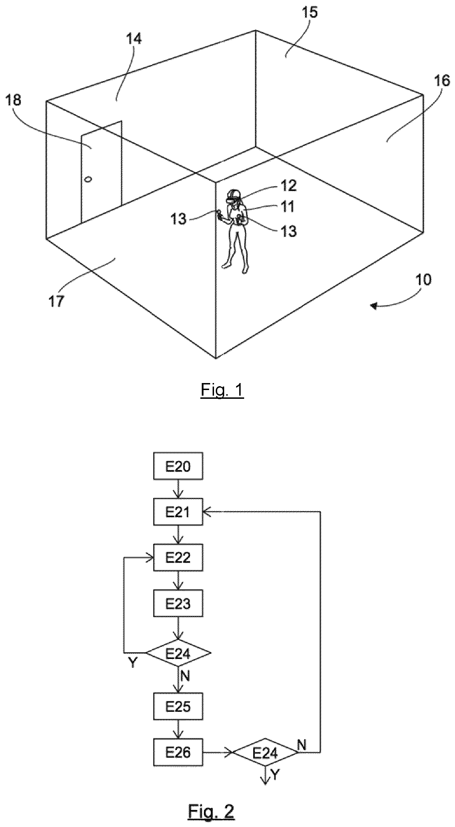

La figure 1 illustre un exemple de mise en œuvre de l'invention selon un mode particulier de réalisation de l'invention. La figure 1 représente un environnement réel (10), ici une pièce, à modéliser. L'environnement réel est ici simplifié et comprend par exemple une pièce comprenant 4 murs (14, 15, 16, 17) et une porte (18).

Un utilisateur (11) est placé dans la pièce et muni d'un casque (12) de réalité virtuelle mixte adapté pour mettre en œuvre le procédé de génération d'une représentation virtuelle selon un mode particulier de réalisation de l'invention qui sera décrit plus loin en relation avec la figure 2.

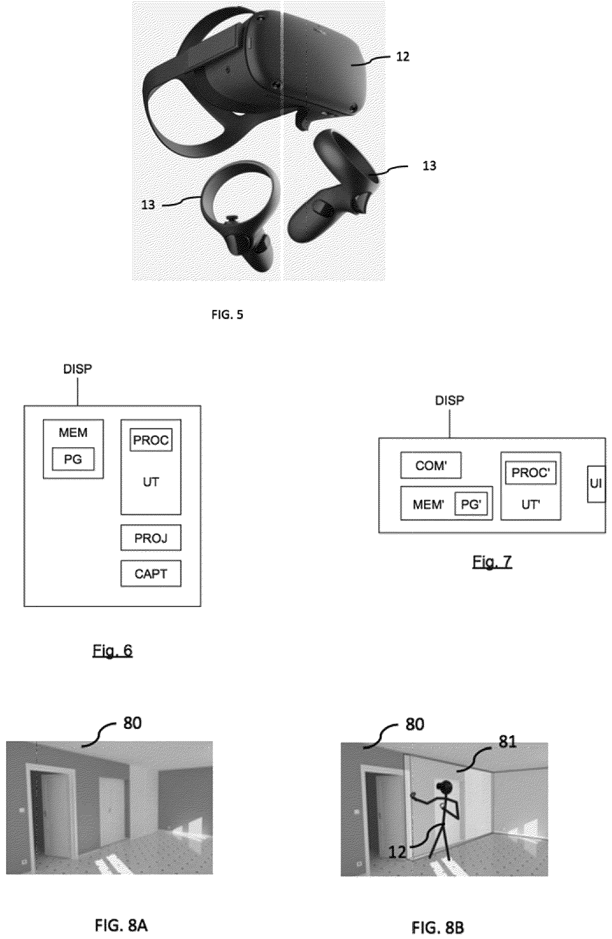

Un exemple de casque de réalité virtuelle mixte est illustré en figure 5. Il s'agit par exemple d'un casque Oculus Quest. Le casque de réalité virtuelle mixte (12) est associé à deux dispositifs d'interface (13), aussi appelés contrôleurs, destinés à être pris en main par un utilisateur du casque et qui permettent à l'utilisateur d'interagir dans l'environnement virtuel projeté par le casque (12).

Un tel casque de réalité virtuelle est un casque autonome en ce sens qu'il ne nécessite pas de terminal supplémentaire pour son fonctionnement. Un tel casque est équipé de capteurs, par exemple des caméras, pour détecter en permanence les mouvements des deux contrôleurs qui lui sont associés.

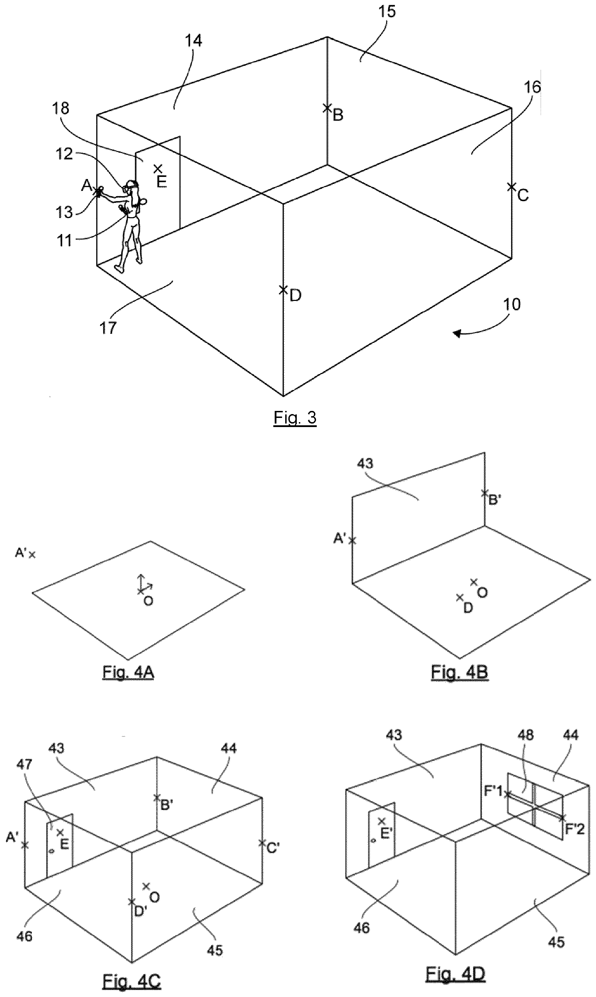

On décrit maintenant en référence avec la figure 2 des étapes du procédé de génération d'une représentation virtuelle de l'environnement illustré en figure 1, selon un mode particulier de réalisation de l'invention. Ces étapes sont décrites en relation avec la figure 3 qui illustre les différents points de prise de mesure dans l'environnement réel et les figures 4A-4D qui illustrent la représentation virtuelle de l'environnement réel à différents stades de la modélisation.

Lors d'une étape E20, à l'aide du casque de réalité virtuelle (12) et d'un contrôleur (13), l'utilisateur lance une application de modélisation d'environnement réel préalablement installée dans une mémoire du casque. Une telle application comprend notamment et de manière non limitative:
- des menus permettant de proposant des actions de saisie et manipulation d'objets d'un environnement virtuel affichés à l'utilisateur,
- des menus de création d'objets virtuels tels qu'une librairie d'éléments virtuels à ajouter à l'environnement virtuel, ces éléments virtuels peuvent avoir des paramètres définis par défaut, notamment de taille, qui peuvent être modifiés manuellement ou par prises de mesures dans l'environnement réel tel que cela sera décrit plus loin,
- des menus de modifications d'éléments virtuels (couleur, forme, texture).

Lors du démarrage de l'application, une représentation virtuelle est initialisée en associant une position de repère d'origine (point O sur la figure 4A) dans la représentation virtuelle à la place initiale de l'utilisateur dans la pièce. Toutes les coordonnées déterminées par le casque de réalité virtuelle (coordonnées du casque lorsque l'utilisateur se déplace, coordonnées des contrôleurs lorsque l'utilisateur bougent les mains et/ou se déplacent) seront définies relativement à cette position initiale de référence.

Le casque de réalité virtuelle (12) détermine en permanence, ou à intervalle de temps réguliers, les coordonnées de position du casque lui-même et des contrôleurs (13).

L'utilisateur va ensuite procéder à la prise de mesures de la pièce pour modéliser celle-ci.

En ce qui concerne la hauteur de la pièce, la hauteur peut être prédéfinie par défaut et adaptée par l'utilisateur ou bien entrée manuellement par l'utilisateur. L'utilisateur peut également prendre une mesure au sol et une autre au plafond afin de définir la hauteur du plafond.

L'application passe ensuite à la génération de la représentation virtuelle via la modélisation des éléments indiqués par l'utilisateur. Pour cela, lors d'une étape E21, l'utilisateur sélectionne dans une librairie d'éléments de plan, un élément à modéliser dans la représentation virtuelle. Par exemple, ici il s'agit d'un mur.

En fonction de l'application, la librairie de types d'éléments virtuels à ajouter à la représentation peut comprendre des éléments tels que mur, fenêtre, porte, sol, plafond, luminaire, prise électrique, radiateur, chemin, pelouse, haie, arbre....

Lors d'une étape E22, l'utilisateur se déplace vers le mur (14) qu'il souhaite modéliser et réalise une prise de mesure. Pour cela, il place un des contrôleurs sur un bord du mur (14) à modéliser, par exemple au point A sur la figure 3 et interagit sur le contrôleur (13). Lors de l'étape E22, le casque reçoit alors un signal de commande en provenance du contrôleur (13).

Lors d'une étape E23, suite à la réception du signal de commande en provenance du contrôleur (13), le casque de réalité virtuelle détermine en fonction des coordonnées relatives de la position du contrôleur dans l'environnement réel au moment où l'utilisateur a interagit, un point correspondant dans la représentation virtuelle (ici le point A' sur la figure 4A). Eventuellement, le casque de réalité virtuelle associe le point ainsi déterminé aux coordonnées en fonction desquelles ce point a été déterminé. Autrement dit, au cours de l'étape E23, le casque mémorise les coordonnées relatives du contrôleur, et éventuellement son orientation dans l'espace, qu'il détermine en continu, au moment où le casque reçoit le signal de commande.

Lors d'une étape E24, il est vérifié si d'autres prises de mesure sont nécessaires pour modéliser l'élément de plan sélectionné. Le nombre de prises de mesure dépend du type de l'élément de plan à modéliser. Par exemple, pour un mur dont la hauteur est connue, deux prises de mesure (une à chaque extrémité du mur) sont suffisantes. Pour une porte, il peut être intéressant de prendre les mesures aux quatre coins de la porte, ou bien de prendre seulement deux mesures et définir une hauteur par défaut, ou encore de prendre une seule mesure définissant l'emplacement de la porte et de définir une hauteur et une largeur par défaut.

Par exemple, s'il s'agit d'une porte à modéliser dans la représentation virtuelle, une telle porte étant inexistante dans l'environnement réel, une prise de mesure pour définir l'emplacement peut suffire.

Si d'autres prises de mesure sont nécessaires pour l'élément de plan sélectionné, le procédé passe à l'étape E22 et l'utilisateur se déplace en un autre point de la pièce pour prendre une autre mesure de l'élément à modéliser. Par exemple, il se rend au point B illustré en figure 3. Les étapes E22 et E23 sont itérées et le point B' de la représentation virtuelle illustré en figure 4B est associé à la position B de l'environnement réel.

Lorsque le nombre de prises de mesure est suffisant pour modéliser l'élément de plan, le procédé passe à l'étape E25 au cours de laquelle l'élément de plan sélectionné est généré dans la représentation virtuelle. Par exemple, dans le cas du mur (14) à modéliser, un mur virtuel (43) est modélisé, comme illustré en figure 4B.

En variante, la génération de l'élément de plan dans la représentation virtuelle peut être déclenchée à l'étape E25 à l'initiative de l'utilisateur, par exemple par une commande sélectionnée dans un menu. Selon cette variante, il n'est plus déterminé lors de l'étape E24, si le nombre de prises de mesures est suffisant. Le procédé détermine les dimensions de l'élément de plan à générer en fonction du nombre de positions successives acquises et éventuellement en fonction de dimensions définies par défaut pour l'élément lorsque le nombre de prises de mesure n'est pas suffisant.

Avantageusement, selon l'invention, la taille de l'élément virtuel généré dans la représentation virtuelle est à l'échelle par rapport à la distance entre les positions acquises dans l'environnement réel. Ainsi, la représentation virtuelle est une représentation fidèle de l'environnement réel et permet de générer un plan 2D ou 3D de l'environnement réel dans lequel les dimensions de chaque élément les uns par rapport aux autres sont respectées.

Lors d'une étape E26, le casque met à jour la représentation virtuelle de l'environnement réel en cours de modélisation en mémorisant le nouvel élément de plan généré. L'application construit ainsi au fur et à mesure des prises de mesures la représentation virtuelle de l'environnement réel.

La représentation virtuelle en cours de modélisation peut être affichée par le casque à l'utilisateur de manière simultanée à la visualisation de l'environnement réel via le casque.

De cette manière l'utilisateur voit la construction progressive de la représentation virtuelle au fur et à mesure des prises de mesures et d'ajout d'éléments dans la représentation.

De plus, l'utilisateur peut ainsi adapter l'emplacement ou la taille des éléments virtuels générés dans la représentation virtuelle. Par exemple, il peut faire coïncider une ouverture virtuelle avec une ouverture réelle, par saisie de l'objet via une action sur le contrôleur et un déplacement de son bras à l'emplacement souhaité.

La représentation virtuelle peut être affichée en taille réelle à l'utilisateur. Autrement dit, la représentation virtuelle est affichée en superposition avec la visualisation de l'environnement réel. Un exemple d'une telle visualisation est illustré en figure 8B.

La figure 8B illustre un exemple d'une représentation virtuelle (81) en cours de génération d'un environnement réel (80) illustré en figure 8A, la représentation virtuelle (81) étant affichée en superposition avec l'environnement réel (80). Les exemples illustrés en figure 8A et 8B sont montrés du point de vue d'un observateur de la scène réelle et non du point de vue de l'utilisateur portant le casque, pour une meilleure compréhension.

Dans cet exemple, la représentation virtuelle (81) est affichée en transparence afin que l'utilisateur (12) puisse voir à la fois l'environnement réel et la représentation virtuelle qu'il est en train de construire à l'aide du casque de réalité virtuelle mixte.

Selon un autre exemple, l'utilisateur peut réaliser un zoom arrière sur la représentation virtuelle afin de l'afficher en plus petit, par exemple pour visualiser la représentation virtuelle dans sa globalité. Un exemple d'une telle restitution est illustré en figure 4C décrite plus loin.

Lors d'une étape E27, il est vérifié si l'utilisateur a quitté le mode de génération de la représentation virtuelle. Si ce n'est pas le cas, le casque se met en attente d'une nouvelle sélection d'un élément à ajouter à la représentation virtuelle.

Sinon, le procédé de génération prend fin.

La représentation virtuelle générée par le casque de réalité virtuelle peut être mémorisée dans un format de fichier pour être utilisée ultérieurement via une restitution sur le casque de réalité virtuelle ou bien tout autre moyen d'affichage adapté. Le procédé de génération d'une représentation virtuelle est ici décrit dans le cas d'une représentation virtuelle en 3D. Toutefois, le procédé peut être appliqué à la modélisation 2D d'un environnement réel pour créer un plan d'architecte par exemple. Ou bien, une représentation 2D peut être obtenue par conversion de la représentation 3D générée.

Selon d'autres exemples, la représentation virtuelle générée peut ensuite être utilisée dans un environnement de réalité virtuelle. Par exemple, la représentation virtuelle générée peut permettre d'adapter un jeu à l'environnement réel de l'utilisateur, ou bien être restituée à l'utilisateur en réalité virtuelle pour permettre à l'utilisateur du casque de se déplacer dans l'environnement virtuel affiché et éventuellement y placer des objets virtuels (meubles, etc...), modifier l'apparence des éléments de la représentation virtuelle (changer les couleurs, les sols, plafonds, ....).

La figure 4C illustre un exemple de la représentation virtuelle générée par le casque lorsque l'utilisateur a ajouté les trois autres murs de la pièce (15, 16 et 17) et la porte (18). La figure 3 illustre des exemples de positions (B, C, D, E) auxquelles des prises de mesures ont pu être réalisées à l'aide du casque et d'un contrôleur et la figure 4C illustre les points (B', C', D', E') de la représentation virtuelle associés à ces positions et les éléments de plan (15, 16, 17, 18) générés correspondants dans la représentation virtuelle.

La figure 4D illustre un exemple de représentation virtuelle de l'environnement réel illustré en figure 3 dans laquelle l'utilisateur a ajouté un élément de plan purement virtuel (48), i.e. non présent dans l'environnement réel. Par exemple, il s'agit ici d'une fenêtre.

Pour cela, lors du procédé de génération, lors de l'étape E21, l'utilisateur a sélectionné un élément de plan de type fenêtre, et lors de l'étape E22, il a positionné un contrôleur à la position F1 de l'environnement réel et interagit sur le contrôleur.

Suite à la réception du signal de commande, lors de l'étape E23, le casque a déterminé en fonction des coordonnées relatives de la position F1 le point F1' dans la représentation virtuelle. Et, dans un mode de réalisation particulier de l'étape E23, le casque a en outre associé les coordonnées relatives de la position F1 au point F1'.

Puis, de nouveau, lors de l'étape E22, l'utilisateur a positionné un contrôleur à la position F2 de l'environnement réel et interagit sur le contrôleur et suite à la réception du signal de commande, lors de l'étape E23, le casque a déterminé en fonction des coordonnées relatives de la position F2 le point F2' dans la représentation virtuelle, puis les a éventuellement associés.

Lors de l'étape E25, une fenêtre virtuelle a été ajoutée dans la représentation virtuelle entre les deux points F1' et F2'.

Le procédé de génération d'une représentation virtuelle décrit ci-dessus permet à l'utilisateur de disposer d'un plan 2D ou 3D fidèle, rapide et simple à réaliser sans besoin de compétences particulières.

La figure 6 illustre de manière simplifiée un exemple d'architecture d'un casque DISP de réalité virtuelle mixte selon un mode particulier de réalisation de l'invention.

Un tel casque est configuré pour mettre en œuvre le procédé de génération d'une représentation virtuelle selon l'un quelconque des modes de réalisation décrits précédemment.

Dans l'exemple non limitatif illustré sur la figure 6, le casque DISP comprend une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en œuvre les étapes du procédé de génération d'une représentation virtuelle tel que décrit précédemment, lorsque le programme est exécuté par le processeur PROC.

A l'initialisation, les instructions de code du programme d'ordinateur PG sont par exemple chargées dans une mémoire avant d'être exécutées par le processeur PROC. Le processeur PROC de l'unité de traitement UT met notamment en œuvre le procédé de génération d'une représentation virtuelle selon l'un quelconque des modes de réalisation décrits en relation avec la figure 2 selon les instructions du programme d'ordinateur PG.

Pour cela, le casque DISP comprend un dispositif de détection CAPT configuré pour détecter des contrôleurs associés au casque DISP. Un tel dispositif de détection comprend notamment des caméras pour capturer les mouvements des contrôleurs, ainsi que tout mouvement de l'utilisateur portant le casque.

Le casque DISP comprend également un dispositif de projection PROJ permettant de restituer visuellement un environnement de réalité virtuelle à l'utilisateur, et notamment la représentation virtuelle générée par le casque via le procédé décrit précédemment.

Le casque DISP comprend également une interface de communication COM permettant de recevoir un signal de commande en provenance d'un contrôleur associé au casque.

La figure 7 illustre de manière simplifiée un exemple d'architecture d'un dispositif d'interface INT selon un mode particulier de réalisation de l'invention. Le dispositif d'interface INT est par exemple un contrôleur associé au casque décrit en relation avec la figure 6.

Dans l'exemple non limitatif illustré sur la figure 7, le dispositif d'interface INT comprend une unité de traitement UT', équipée par exemple d'un processeur PROC', et pilotée par le programme d'ordinateur PG' stocké en mémoire MEM'. Le processeur PROC' et la mémoire MEM' sont notamment configurés pour détecter une interaction utilisateur sur le dispositif d'interface via une interface utilisateur UI du dispositif d'interface, et émettre un signal d'interaction utilisateur vers le casque de réalité virtuelle mixte auquel il est associé suite à la interaction utilisateur détectée. Pour cela, le dispositif d'interface INT comprend une interface de communication COM' pour transmettre le signal d'interaction utilisateur ou signal de commande au casque.

## Revendications

1. Procédé de génération d'une représentation virtuelle à au moins 2 dimensions, d'un environnement réel, la génération étant mise en œuvre par un casque de réalité virtuelle mixte destiné à être porté par un utilisateur, le casque de réalité virtuelle mixte étant associé à au moins un dispositif d'interface, le procédé de génération comprend:
- une acquisition de coordonnées relatives dans l'environnement réel, correspondant à une position dudit dispositif d'interface dans l'environnement réel,
- suite à une interaction (E22) de l'utilisateur sur ledit dispositif d'interface, une détermination (E23) en fonction desdites coordonnées relatives de la position dudit dispositif d'interface dans l'environnement réel d'un point correspondant dans la représentation virtuelle,
- une génération (E25) de ladite représentation virtuelle à partir d'au moins le point associé aux coordonnées relatives de la position acquise dudit dispositif d'interface.

2. Procédé de génération selon la revendication 1, dans lequel lesdites coordonnées relatives sont définies par rapport à une position de référence de l'environnement réel, ladite position de référence correspondant à une position initiale du casque de réalité virtuelle associée à un point d'origine d'un référentiel de ladite représentation virtuelle.

3. Procédé de génération selon l'une quelconque des revendications 1 ou 2, comprenant en outre, lorsqu'au moins deux points de la représentation virtuelle sont successivement associés à au moins deux positions acquises dudit dispositif d'interface dans l'environnement réel, une génération d'un élément virtuel dans la représentation virtuelle, la taille dudit élément virtuel généré dans la représentation virtuelle étant à l'échelle par rapport à la distance entre les au moins deux positions acquises dans l'environnement réel.

4. Procédé de génération selon la revendication 3, dans lequel un type dudit élément virtuel est préalablement sélectionné dans une librairie de types d'élément virtuel.

5. Procédé de génération selon la revendication 4, dans lequel lorsque l'élément virtuel est un élément de plan, la librairie de types d'éléments virtuel comprend au moins l'un quelconque des types suivants: mur, fenêtre, porte, sol, plafond, luminaire, prise électrique, radiateur, chemin, pelouse, haie, arbre.

6. Procédé de génération selon l'une quelconque des revendications 1 à 5, comprenant en outre, l'affichage via le casque de réalité virtuelle mixte de ladite représentation virtuelle.

7. Procédé de génération selon la revendication 6, dans lequel, lorsque la représentation virtuelle est une représentation en 3 dimensions, l'affichage de ladite représentation virtuelle est réalisé en superposition avec l'environnement réel visualisé par l'utilisateur via le casque de réalité virtuelle mixte.

8. Casque de réalité virtuelle mixte, apte à être connecté à un dispositif d'interface, ledit casque comprenant:
- un détecteur de position du dispositif d'interface dans un environnement réel dans lequel ledit casque est placé, le détecteur acquérant des coordonnées relatives d'une position dudit dispositif d'interface dans l'environnement réel,
- un processeur configuré pour déterminer, suite à une réception dudit signal d'interaction utilisateur en provenance dudit dispositif d'interface, en fonction des coordonnées relatives un point correspondant dans une représentation virtuelle à au moins 2 dimensions dudit environnement réel,
- un générateur de ladite représentation virtuelle à partir d'au moins le point associé aux coordonnées relatives de la position acquise dudit dispositif d'interface.

9. Dispositif d'interface apte à être connecté à un casque de réalité virtuelle mixte et comprenant:
- un émetteur échangeant avec un localisateur du dispositif d'interface dans un environnement réel dans lequel ledit casque est placé, le localisateur acquérant des coordonnées relatives d'une position dudit dispositif d'interface dans l'environnement réel,
- un détecteur d'interaction utilisateur sur ledit dispositif d'interface, et
- un émetteur d'un signal d'interaction utilisateur suite à ladite interaction utilisateur détectée, le signal d'interaction étant configuré pour déclencher un génération d'un représentation virtuelle à au moins 2 dimensions d'un environnement réel à partir d'au moins le point associé aux coordonnées relatives de la position acquise dudit dispositif d'interface.

10. Système de génération d'une représentation virtuelle à au moins 2 dimensions, d'un environnement réel, comprenant:
- un casque de réalité virtuelle mixte selon la revendication 8 et au moins un dispositif d'interface selon la revendication 9.

11. Programme d'ordinateur comportant des instructions pour la mise en œuvre du procédé de génération d'une représentation virtuelle à au moins 2 dimensions d'un environnement réel selon l'une quelconque des revendications 1 à 7, lorsque ledit programme est exécuté par le processeur d'un casque de réalité virtuelle mixte selon la revendication 8.

12. Support lisible par ordinateur comportant un programme d'ordinateur selon la revendication 11.

## Patentansprüche

1. Verfahren zum Erzeugen einer virtuellen Darstellung mit mindestens 2 Dimensionen einer realen Umgebung, wobei das Erzeugen von einem Mixed-Virtual-Reality-Headset durchgeführt wird, das dazu bestimmt ist, von einem Benutzer getragen zu werden, wobei das Mixed-Virtual-Reality-Headset mindestens einer Schnittstellenvorrichtung zugeordnet ist, wobei das Verfahren zum Erzeugen Folgendes umfasst:
- ein Erfassen von relativen Koordinaten in der realen Umgebung, die einer Position der Schnittstellenvorrichtung in der realen Umgebung entsprechen,
- nach einer Interaktion (E22) des Benutzers auf der Schnittstellenvorrichtung, ein Bestimmen (E23), in Abhängigkeit von den relativen Koordinaten der Position der Schnittstellenvorrichtung in der realen Umgebung, eines entsprechenden Punkts in der virtuellen Darstellung,
- ein Erzeugen (E25) der virtuellen Darstellung ausgehend von mindestens dem Punkt, der den relativen Koordinaten der erfassten Position der Schnittstellenvorrichtung zugeordnet ist.

2. Verfahren zum Erzeugen nach Anspruch 1, wobei die relativen Koordinaten in Bezug auf eine Referenzposition der realen Umgebung definiert sind, wobei die Referenzposition einer Ausgangsposition des Virtual-Reality-Headsets entspricht, die einem Ursprungspunkt eines Koordinatensystems der virtuellen Darstellung zugeordnet ist.

3. Verfahren zum Erzeugen nach einem der Ansprüche 1 oder 2, umfassend ferner, wenn mindestens zwei Punkte der virtuellen Darstellung nacheinander mindestens zwei erfassten Positionen der Schnittstellenvorrichtung in der realen Umgebung zugeordnet werden, ein Erzeugen eines virtuellen Elements in der virtuellen Darstellung, wobei die Größe des in der virtuellen Darstellung erzeugten virtuellen Elements in Bezug auf den Abstand zwischen den mindestens zwei erfassten Positionen in der realen Umgebung maßstabsgetreu ist.

4. Verfahren zum Erzeugen nach Anspruch 3, wobei ein Typ des virtuellen Elements zuvor aus einer Bibliothek von Typen virtueller Elemente ausgewählt wird.

5. Verfahren zum Erzeugen nach Anspruch 4, wobei, wenn das virtuelle Element ein Ebenenelement ist, die Bibliothek von Typen virtueller Elemente mindestens einen der folgenden Typen umfasst: Wand, Fenster, Tür, Boden, Decke, Leuchte, Steckdose, Heizkörper, Weg, Rasen, Hecke, Baum.

6. Verfahren zum Erzeugen nach einem der Ansprüche 1 bis 5, umfassend ferner das Anzeigen der virtuellen Darstellung über das Mixed-Virtual-Reality-Headset.

7. Verfahren zum Erzeugen nach Anspruch 6, wobei, wenn die virtuelle Darstellung eine Darstellung in 3 Dimensionen ist, die Anzeige der virtuellen Darstellung in Überlagerung mit der realen Umgebung ausgeführt wird, die von dem Benutzer über das Mixed-Virtual-Reality-Headset visualisiert wird.

8. Mixed-Virtual-Reality-Headset, das dazu geeignet ist, mit einer Schnittstellenvorrichtung verbunden zu werden, wobei das Headset Folgendes umfasst:
- einen Detektor für die Position der Schnittstellenvorrichtung in einer realen Umgebung, in der das Headset platziert ist, wobei der Detektor relative Koordinaten einer Position der Schnittstellenvorrichtung in der realen Umgebung erfasst,
- einen Prozessor, der dazu ausgelegt ist, nach einem Empfangen des Benutzerinteraktionssignals von der Schnittstellenvorrichtung, in Abhängigkeit von den relativen Koordinaten einen entsprechenden Punkt in einer virtuellen Darstellung mit mindestens 2 Dimensionen der realen Umgebung zu bestimmen,
- einen Generator der virtuellen Darstellung ausgehend mindestens von dem Punkt, der den relativen Koordinaten der erfassten Position der Schnittstellenvorrichtung zugeordnet ist.

9. Schnittstellenvorrichtung, die dazu geeignet ist, mit einem Mixed-Virtual-Reality-Headset verbunden zu werden, und umfasst:
- einen Sender, der mit einem Lokalisierer der Schnittstellenvorrichtung in einer realen Umgebung, in der das Headset platziert ist, interagiert, wobei der Lokalisierer relative Koordinaten einer Position der Schnittstellenvorrichtung in der realen Umgebung erfasst,
- einen Detektor für Benutzerinteraktion auf der Schnittstellenvorrichtung, und
- einen Sender eines Benutzerinteraktionssignals nach der detektierten Benutzerinteraktion, wobei das Interaktionssignal dazu ausgelegt ist, ein Erzeugen einer virtuellen Darstellung mit mindestens 2 Dimensionen einer realen Umgebung ausgehend von mindestens dem Punkt, der den relativen Koordinaten der erfassten Position der Schnittstellenvorrichtung zugeordnet ist, auszulösen.

10. System zum Erzeugen einer virtuellen Darstellung mit mindestens 2 Dimensionen einer realen Umgebung, das Folgendes umfasst:
- ein Mixed-Virtual-Reality-Headset nach Anspruch 8 und mindestens eine Schnittstellenvorrichtung nach Anspruch 9.

11. Computerprogramm, das Anweisungen umfasst, die beim Ausführen des Programms durch den Prozessor eines Mixed-Virtual-Reality-Headsets nach Anspruch 8 das Verfahren zum Erzeugen einer virtuellen Darstellung mit mindestens 2 Dimensionen nach einem der Ansprüche 1 bis 7 ausführen.

12. Computerlesbares Speichermedium, das ein Computerprogramm nach Anspruch 11 beinhaltet.

## Claims

1. Method for generating a virtual representation in at least 2 dimensions, of a real environment, the generation being implemented by a mixed virtual reality headset intended to be worn by a user, the mixed virtual reality headset being associated with at least one interface device, the generating method comprising:
- acquiring relative coordinates in the real environment, corresponding to a position of said interface device in the real environment,
- following an interaction (E22) of the user with said interface device, determining (E23) depending on said relative coordinates of the position of said interface device in the real environment a corresponding point in the virtual representation,
- generating (E25) said virtual representation based at least on the point associated with the relative coordinates of the acquired position of said interface device.

2. Generating method according to Claim 1, wherein said relative coordinates are defined with respect to a reference position of the real environment, said reference position corresponding to an initial position of the virtual reality headset, which initial position is associated with an origin point of a reference frame of said virtual representation.

3. Generating method according to either one of Claims 1 and 2, further comprising, when at least two points of the virtual representation are successively associated with at least two acquired positions of said interface device in the real environment, generating a virtual element in the virtual representation, the size of said virtual element generated in the virtual representation being scaled with respect to the distance between the at least two acquired positions in the real environment.

4. Generating method according to Claim 3, wherein a type of said virtual element is previously selected from a library of types of virtual element.

5. Generating method according to Claim 4, wherein, when the virtual element is a plane element, the library of types of virtual element contains at least any of the following types: wall, window, door, floor, ceiling, light, electrical socket, radiator, path, lawn, hedge, tree.

6. Generating method according to any one of Claims 1 to 5, further comprising displaying said virtual representation via the mixed virtual reality headset.

7. Generating method according to Claim 6, wherein, when the virtual representation is a 3-dimensional representation, said virtual representation is displayed in superposition with the real environment viewed by the user via the mixed virtual reality headset.

8. Mixed virtual reality headset capable of being connected to an interface device, said headset comprising:
- a detector of the position of the interface device in a real environment in which said headset is placed, the detector acquiring relative coordinates of a position of said interface device in the real environment,
- a processor configured to determine, following receipt of said user interaction signal from said interface device, depending on the relative coordinates, a corresponding point in a virtual representation in at least 2 dimensions of said real environment,
- a generator of said virtual representation based at least on the point associated with the relative coordinates of the acquired position of said interface device.

9. Interface device capable of being connected to a mixed virtual reality headset and comprising:
- a transmitter making exchanges with a locator of the interface device in a real environment in which said headset is placed, the locator acquiring relative coordinates of a position of said interface device in the real environment,
- a detector of user interaction with said interface device, and
- a transmitter of a user interaction signal following said detected user interaction, the interaction signal being configured to trigger generation of a virtual representation in at least 2 dimensions of a real environment based at least on the point associated with the relative coordinates of the acquired position of said interface device.

10. System for generating a virtual representation in at least 2 dimensions, of a real environment, comprising:
- a mixed virtual reality headset according to Claim 8 and at least one interface device according to Claim 9.

11. Computer program comprising instructions for implementing the method for generating a virtual representation in at least 2 dimensions of a real environment according to any one of Claims 1 to 7, when said program is executed by the processor of a mixed virtual reality headset according to Claim 8.

12. Computer-readable medium comprising a computer program according to Claim 11.
